# FASCICULE DE BREVET EUROPEEN

(11) **EP 2 445 381 B1**
(45) Date de publication et mention de la délivrance du brevet: **14.08.2013**
(21) Numéro de dépôt: 10740264.6
(22) Date de dépôt: 25.06.2010
(51) Int. Cl.: A47J 37/04, A47J 37/07

(54) **DISPOSITIF DE CUISSON**
KOCHVORRICHTUNG
COOKING DEVICE

(30) Priorité: 25.06.2009 FR 0954362
(43) Date de publication de la demande: 02.05.2012
(73) Titulaire: Ledermann, Marc, 74290 Talloires (FR)
(72) Inventeur: Ledermann, Marc, 74290 Talloires (FR)
(74) Mandataire: Poncet, Jean-François
(86) Numéro de dépôt international: PCT/IB2010/001580
(87) Numéro de publication internationale: WO 2010/150095

(56) Documents cités:
- WO-A-01/49156
- WO-A1-2005/092163
- DE-U1- 20 111 703
- DE-U1- 20 216 178
- US-A- 5 477 028
- US-A- 6 065 466

## Description

### DOMAINE TECHNIQUE DE L'INVENTION

La présente invention concerne les dispositifs de cuisson et plus particulièrement ceux qui sont prévus pour être utilisés en extérieur, tels que par exemple des barbecues.

On connaît par exemple du document US 6,065,466 un dispositif de cuisson de type barbecue comprenant:
- une paroi périphérique tubulaire rigide ayant une partie inférieure adaptée pour reposer sur une surface d'utilisation,
- un support de nourriture prévu pour recevoir et supporter de la nourriture,
- un moyen de fixation, solidaire de la paroi périphérique tubulaire, et apte à positionner le support de nourriture dans au moins une position de cuisson,
- une source de chaleur positionnée au-dessous du support de nourriture et à distance de celui-ci en définissant un espace intermédiaire.

Le principe qui est à la base de ces dispositifs de cuisson est d'apporter la chaleur suffisante à la nourriture pour la cuire. De façon classique, le support de cuisson est une grille ou une plancha.

Pour la cuisson, le support de nourriture est placé au-dessus de la source de chaleur dans une position de cuisson. La position de cuisson est prédéterminée par les moyens de fixation.

Les moyens de fixation sont habituellement constitués de protubérances prévues sur l'intérieur de l'enveloppe latérale rigide et sur lesquelles repose le support de nourriture.

Les dispositifs de cuisson de type barbecue, par le fait qu'ils comportent une source de chaleur, constituent des dispositifs relativement dangereux, d'une part pour les opérateurs qui doivent s'en approcher pour intervenir sur le dispositif lui-même ou sur la nourriture en cours de cuisson, et d'autre part pour les enfants qui peuvent être tentés de toucher des parties chaudes du dispositif.

On a déjà résolu en partie ce risque en prévoyant des doubles parois périphériques, évitant un échauffement excessif de la surface périphérique externe du dispositif.

Il reste cependant, avec les dispositifs connus tels que celui du document US 6,065,466, un risque de blessure de l'opérateur lorsqu'il doit intervenir sur la source de chaleur, notamment dans le cas d'une source de chaleur à combustible solide tel que le bois ou le charbon, lors d'opérations de rechargement en combustible, ou lors d'opérations de nettoyage alors que le dispositif n'est pas encore suffisamment refroidi. En effet, l'accès à la source de chaleur et aux réceptacles de résidus de cuisson se fait par le haut, ce qui nécessite le retrait préalable du support de nourriture (avec les risques de brûlure associés) à défaut de quoi le rechargement en combustible conduit à souiller la nourriture en cours de cuisson. Le document WO 2005/092163 décrit un autre dispositif de cuisson de type barbecue.

### EXPOSE DE L'INVENTION

Le problème proposé par la présente invention est de prévoir un dispositif de cuisson procurant une meilleure sécurité d'utilisation, en particulier lors des opérations de nettoyage ou de rechargement en combustible.

Selon l'invention, les opérations de nettoyage ou de rechargement en combustible peuvent être réalisées sans déplacer ni dégrader la nourriture en cours de cuisson, ce qui simultanément évite les écoulements de résidus de cuisson à l'extérieur du dispositif.

Pour atteindre ces buts ainsi que d'autres, la présente invention propose un dispositif de cuisson comprenant :
- un support de nourriture conformé pour recevoir et supporter de la nourriture en cours de cuisson,
- un moyen de fixation pour recevoir et supporter le support de nourriture,
- une base apte à reposer sur une surface d'utilisation,
- un moyen de liaison rigide, maintenant le moyen de fixation et la base en position fixe et à l'écart l'un de l'autre le long d'un axe longitudinal,
- une source de chaleur positionnée entre le support de nourriture et la base en définissant avec le support de nourriture un espace intermédiaire,
- un espace intérieur prévu entre le moyen de fixation et la base,
et dans lequel :
- le moyen de fixation et la source de chaleur forment un sous-ensemble de cuisson interchangeable rapporté sur le moyen de liaison rigide,
- une paroi périphérique tubulaire continue encercle l'espace intérieur entre la base et le moyen de fixation autour de l'axe longitudinal,
- la paroi périphérique comporte une partie fixe formant le moyen de liaison rigide, auquel s'articule au moins une partie mobile déplaçable entre une position de fermeture de paroi périphérique et une position d'ouverture de paroi périphérique libérant l'accès à l'espace intérieur,
- le sous-ensemble de cuisson interchangeable comprend une partie supérieure fixe et une partie inférieure mobile, ladite partie inférieure mobile pouvant prendre une position rentrée dans laquelle elle se trouve en alignement longitudinal avec support de nourriture, et une position sortie dans laquelle, après ouverture de la paroi périphérique, elle se trouve déportée latéralement pour faciliter son accès.

Le déport latéral de la partie inférieure mobile du sous-ensemble interchangeable permet l'accès aux moyens récepteurs de résidus de nourriture, sans avoir à déplacer le support de nourriture et la nourriture qu'il peut supporter.

De préférence, la paroi périphérique encercle également le moyen de fixation sur la majeure partie de la dimension longitudinale du moyen de fixation.

De la sorte, on réalise une double paroi d'isolation thermique jusqu'en partie supérieure du moyen de fixation, ce qui évite l'échauffement excessif de la périphérie du dispositif.

Selon un mode de réalisation avantageux, la paroi périphérique comporte quatre secteurs, deux de ces secteurs adjacents étant fixes et formant le moyen de liaison rigide, et les deux autres secteurs étant chacun articulés à l'un des secteurs fixes pour prendre une position de fermeture de paroi périphérique et une position d'ouverture de paroi périphérique.

Par cette disposition, on peut réaliser une ouverture large pour un accès aisé à l'espace intérieur du dispositif, par l'ouverture des deux secteurs mobiles, sans augmenter exagérément l'encombrement du dispositif lorsque les secteurs mobiles sont en position ouverte.

De préférence, les quatre secteurs sont de même forme. De la sorte, on réalise une standardisation des pièces constitutives du dispositif, notamment des pièces constituant la paroi périphérique qui peut être en fonte, et l'on réduit la taille des éléments constitutifs et donc le coût de réalisation de ces éléments.

Selon un mode de réalisation avantageux, la base comprend un socle, occupant la section transversale d'extrémité de la structure tubulaire définie par la paroi périphérique, et fixé au moyen de liaison rigide.

On augmente ainsi la stabilité du dispositif, tout en conservant un accès large à l'espace intérieur. La fermeture inférieure de la structure tubulaire définie par la paroi périphérique permet en outre de l'utiliser comme support, par exemple pour une bouteille de gaz ou pour des ustensiles de cuisson.

Dans le cas de la présence d'un socle, il est avantageux de prévoir que le socle soit séparé de la paroi périphérique par un interstice de ventilation. Cet interstice est peu visible, mais néanmoins très efficace pour assurer une bonne ventilation de la source de chaleur.

Selon un mode de réalisation avantageux, la partie inférieure mobile peut être montée à pivotement selon une articulation latérale d'axe longitudinal et solidaire de la partie supérieure fixe.

Un tel pivotement est particulièrement aisé. En outre, en position déportée, la partie inférieure mobile se trouve protégée latéralement par les secteurs mobiles de la paroi périphérique, dans le cas d'une présence de deux secteurs mobiles. On améliore ainsi la sécurité de l'utilisation.

L'invention est compatible avec la réalisation d'un dispositif de cuisson pouvant avoir différents types de source de chaleur.

Selon un premier mode de réalisation, la partie supérieure fixe comporte le moyen de fixation qui soutient le support de nourriture, et comporte une source de chaleur de type brûleur à gaz ou résistance électrique, et la partie inférieure mobile comporte une vasque formant réflecteur et réceptacle de récupération des résidus de cuisson.

Dans ce cas, le support de nourriture peut être une grille, une plancha ou un wok.

Selon un second mode de réalisation, la partie supérieure fixe comporte le moyen de fixation qui soutient le support de nourriture, et la partie inférieure mobile comporte une source de chaleur de type foyer à charbon ou autres combustibles solides et un réceptacle de récupération des cendres et des résidus de cuisson.

Dans ce cas, le moyen de fixation peut avantageusement comprendre des moyens d'actionnement manuel aptes à déplacer de façon continue le support de nourriture entre une position de cuisson proximale dans laquelle l'espace intermédiaire est réduit et une position de cuisson distale dans laquelle l'espace intermédiaire est augmenté, les moyens d'actionnement manuel comportant une partie de préhension qui est accessible par l'utilisateur à l'écart du moyen de fixation.

Dans ce cas, le support de nourriture est de préférence sous forme d'une grille.

Dans tous les cas, dans un dispositif selon l'invention, le moyen de fixation comprend une couronne périphérique continue, recouvrant le bord supérieur de la paroi périphérique tubulaire, et vis-à-vis de laquelle le support de nourriture est déporté en direction de la base.

Avantageusement, on peut prévoir que les moyens d'actionnement manuel comprennent :
- un organe d'actionnement rotatif portant la partie de préhension pour son déplacement autour de l'enveloppe latérale rigide, et
- des moyens de transformation du mouvement rotatif en un mouvement de déplacement continu du support de nourriture vers et à l'écart de la source de chaleur.

Cette conception des moyens d'actionnement manuel est simple et permet un déplacement aisé et optimal du support de nourriture, sans risque de toucher le support de nourriture encore chaud.

On peut avantageusement prévoir que le dispositif de cuisson comprend en outre des moyens de ventilation mécanique d'allumage.

Ceci facilite l'allumage de la source de chaleur.

Avantageusement, on peut prévoir que les moyens de ventilation mécanique d'allumage comprennent une turbine apte à propulser de l'air sur le foyer à charbon ou autres combustibles solides.

On peut avantageusement prévoir que le dispositif de cuisson comprend, dans la partie inférieure de l'espace intérieur délimité par l'enveloppe latérale rigide, un logement adapté pour recevoir une bouteille de gaz.

### DESCRIPTION SOMMAIRE DES DESSINS

D'autres objets, caractéristiques et avantages de la présente invention ressortiront de la description suivante de modes de réalisation particuliers, faite en relation avec les figures jointes, parmi lesquelles :
- la figure 1 est une coupe longitudinale de principe d'un dispositif de cuisson selon un premier mode de réalisation de l'invention ;
- la figure 2 est une vue en coupe longitudinale d'un dispositif de cuisson selon le premier mode de réalisation ;
- la figure 3 est une vue en coupe longitudinale d'un second mode de réalisation de la présente invention ;
- la figure 4 illustre en perspective la structure périphérique externe d'un dispositif de cuisson selon un autre mode de réalisation de la présente invention, en position fermée ;
- la figure 5 est une vue de côté de la structure périphérique externe de la figure 4 ;
- la figure 6 est une vue de face de la structure périphérique externe de la figure 4 ;
- la figure 7 est une vue en perspective illustrant la structure périphérique externe de la figure 4, en position ouverte ;
- la figure 8 est une vue de côté de la structure périphérique externe ouverte de la figure 7 ;
- la figure 9 est une vue de face de la structure périphérique externe ouverte de la figure 7 ;
- la figure 10 est une vue en perspective en position ouverte d'un dispositif de cuisson à gaz reprenant la structure périphérique externe des figures 4 à 9 ;
- la figure 11 est une vue de face du dispositif de la figure 10, à l'état ouvert ;
- la figure 12 est une vue en perspective d'une source de chaleur de type gaz, selon le mode de réalisation des figures 10 et 11 ;
- la figure 13 est une vue en perspective à l'état ouvert d'un dispositif de cuisson à charbon reprenant la structure périphérique externe des figures 4 à 9 ;
- la figure 14 est une vue de face du dispositif de la figure 13 ;
- la figure 15 est une vue de côté du dispositif de la figure 13 ;
- la figure 16 illustre en perspective la source de chaleur et le moyen de fixation dans le mode de réalisation des figures 13 à 15 ;
- les figures 17 et 18 illustrent respectivement en perspective et en vue de dessus, le mouvement relatif de la partie supérieure et de la partie inférieure du sous-ensemble de cuisson du mode de réalisation des figures 13 à 15 ; et
- la figure 19 illustre en vue de côté une cloche amovible.

### DESCRIPTION DES MODES DE REALISATION PREFERES

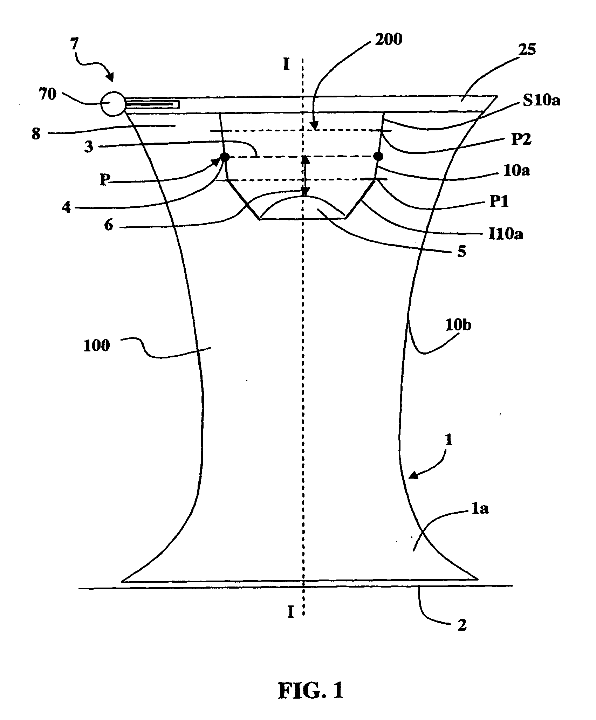

Le dispositif de cuisson, illustré sur la figure 1, comprend un moyen de liaison rigide constitué d'une enveloppe latérale rigide 100, et une base 1 a adaptée pour reposer sur une surface d'utilisation 2. La surface d'utilisation 2 peut être la terre dans un jardin, ou une terrasse, par exemple.

Un support de nourriture 3 est prévu pour recevoir et supporter de la nourriture à cuire. Le support de nourriture 3 est conçu pour pouvoir être positionné dans une position de cuisson intermédiaire P par un moyen de fixation 4, dans un espace de cuisson 200 délimité par l'enveloppe latérale rigide 100.

La nourriture positionnée sur le support de nourriture 3 est cuisinée grâce à la chaleur émise par une source de chaleur 5 prévue au-dessous du support de nourriture 3 et à distance de celui-ci en définissant un espace intermédiaire 6.

L'enveloppe latérale rigide 100 définit une paroi extérieure 10b, à l'écart d'une paroi intérieure 10a pour définir entre elles un espace d'isolation thermique 8. Ainsi, seule la paroi intérieure 10a est à proximité de la source de chaleur 5 et est donc chaude. La chaleur se propage difficilement dans l'air de l'espace d'isolation thermique 8 et se disperse avant d'atteindre la paroi extérieure 10b.

La position de cuisson intermédiaire P est située entre une position de cuisson proximale P1 et une position de cuisson distale P2.

Le support de nourriture 3 est une grille sensiblement circulaire dans le mode de réalisation illustré sur la figure 1. Dans d'autres modes de réalisation non représentés, le support de nourriture peut être une grille de forme carrée, rectangulaire ou encore de toute autre forme.

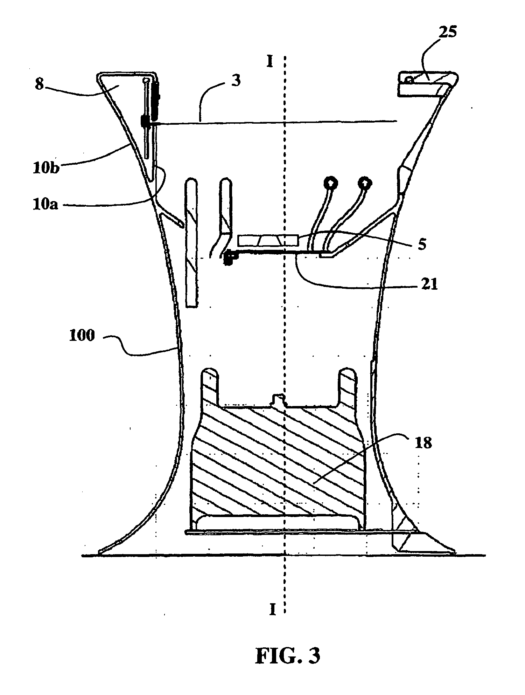

Dans le mode de réalisation de la figure 3, le support de nourriture 3 est une plancha.

Pour des raisons de stabilité et de bonne tenue à la chaleur, on peut prévoir que l'enveloppe latérale rigide 100 est réalisée en fonte. Ceci présente l'avantage que la fonte ne rouille pas. Ainsi, le dispositif de cuisson présente une bonne tenue dans le temps, et supporte les intempéries.

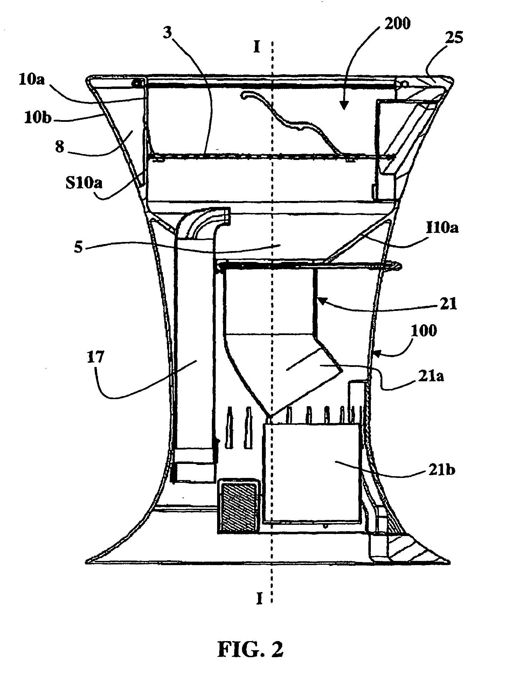

Comme illustré en coupe sur la figure 2, l'espace d'isolation thermique 8 est fermé à sa partie supérieure par une couronne 25. Cette couronne 25 est rapportée sur l'enveloppe latérale rigide 100.

La figure 2 illustre plus en détails un second mode de réalisation dans lequel la source de chaleur 5 est un foyer à charbon ou autres combustibles solides. On prévoit une ventilation mécanique d'allumage 17 pour alimenter la source de chaleur 5 en air de combustion. La ventilation mécanique d'allumage 17 peut comprendre une turbine apte à propulser de l'air sur le foyer à charbon ou autres combustibles solides, la turbine étant entraînée par un moteur électrique alimenté en électricité par une batterie ou des cellules photovoltaïques. L'avantage des cellules photovoltaïques est qu'elles peuvent être flexibles et donc être facilement intégrées dans la forme extérieure du dispositif de cuisson.

De façon avantageuse, la paroi intérieure 10a comprend un tronçon supérieur S10a (figures 1 et 2) sensiblement cylindrique se raccordant à un tronçon inférieur I10a (figures 1 et 2) sensiblement conique.

Le tronçon supérieur S10a sensiblement cylindrique facilite la conception des moyens pour supporter et déplacer le support de nourriture 3.

Le tronçon inférieur I10a facilite l'adaptation automatique de la source de chaleur 5 en fonction de la quantité de nourriture à cuire.

Ainsi, lorsque la quantité de nourriture à cuire est faible, on peut la placer au centre du support de nourriture 3, et on utilise une quantité réduite de charbon ou autres combustibles solides qui se concentre naturellement au centre de la partie conique, ce qui a pour effet de concentrer aussi la chaleur au centre du support de nourriture 3. On réduit ainsi la consommation de charbon ou autres combustibles solides.

Pour cuire une plus grande quantité de nourriture, répartie sur toute la surface du support de nourriture 3, on utilise une plus grande quantité de charbon ou autres combustible solides qui se répartit naturellement sous toute la surface du support de nourriture pour une cuisson répartie.

Comme illustré, on peut également prévoir des moyens de récupération des résidus 21, les résidus étant à la fois des résidus de cuisson et des cendres. Les résidus sont dirigés par un conduit 21a depuis le foyer jusqu'à un réservoir de résidus 21 b amovible que l'utilisateur devra vider périodiquement. Cette conception facilite le nettoyage.

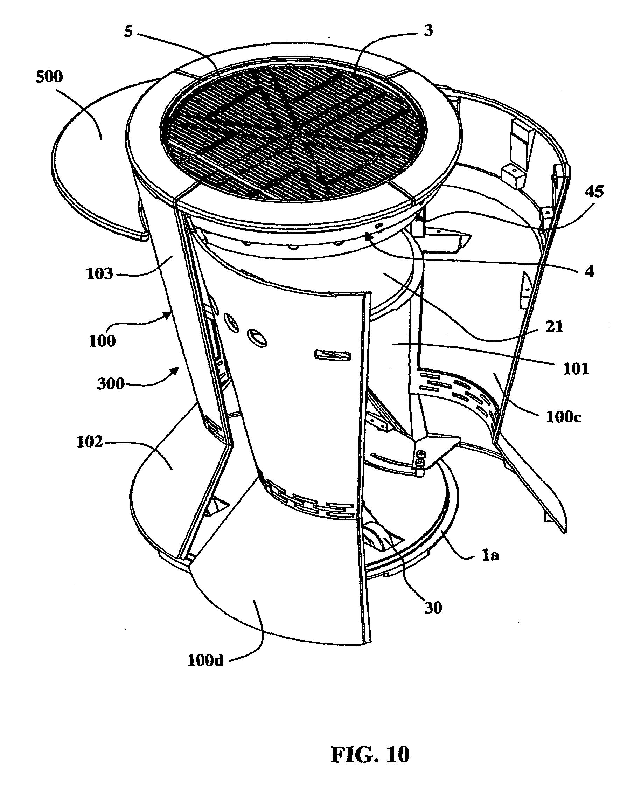

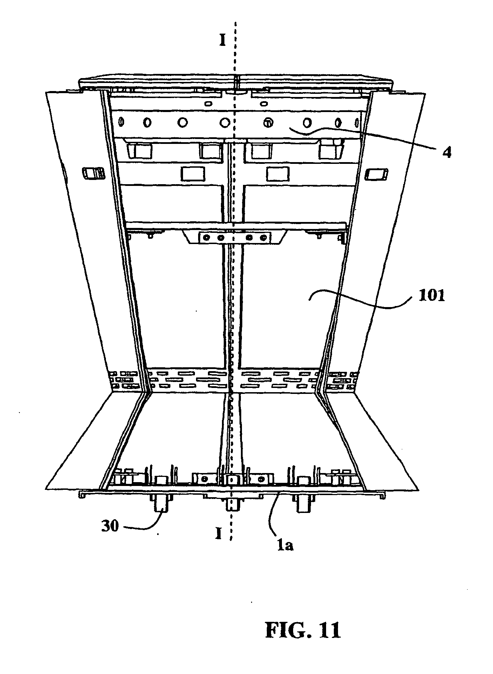

On considère maintenant le mode de réalisation illustré sur les figures 10 et 11.

Dans ce mode de réalisation, on retrouve l'enveloppe latérale rigide 100, la base 1 a, le support de nourriture 3, et le moyen de fixation 4.

Dans ce mode de réalisation, la source de chaleur 5 est un brûleur à gaz, sous forme de barres de brûleur diamétrales disposées en étoile, au-dessous du support de nourriture 3.

L'enveloppe latérale rigide 100 est une structure tubulaire continue qui encercle l'espace intérieur 101 entre la base 1a et le moyen de fixation 4 autour d'un axe longitudinal I-I. La section transversale de la paroi périphérique 100, selon un plan perpendiculaire à l'axe longitudinal I-I, est sensiblement circulaire.

La paroi périphérique 100 comprend un tronçon inférieur 102 généralement conique et allant en se rétrécissant à l'écart de la base 1 a. Le tronçon supérieur 103 est généralement conique inversé, en allant en se rétrécissant en direction de la base 1a.

Le tronçon inférieur occupe environ le quart de la dimension longitudinale du dispositif le long de l'axe I-I, le tronçon supérieur 103 occupant les trois quarts de cette dimension longitudinale.

La base 1 a est formée d'un socle qui occupe la section transversale d'extrémité de la structure tubulaire définie par la paroi périphérique 100. Comme illustré sur les figures, le socle 1a peut comprendre des roulettes 30 escamotables, par exemple des roulettes que l'on peut sortir ou rentrer par actionnement d'un levier accessible depuis l'espace intérieur 101.

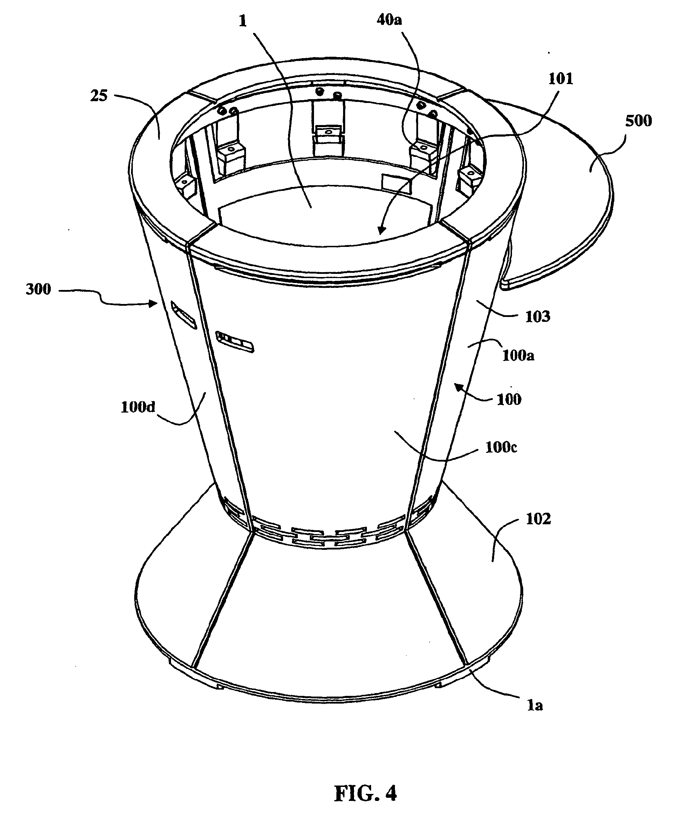

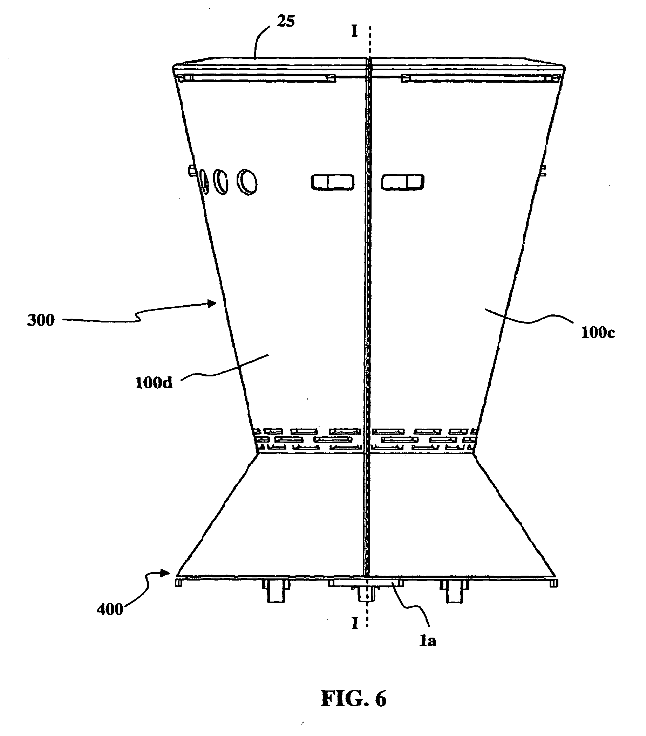

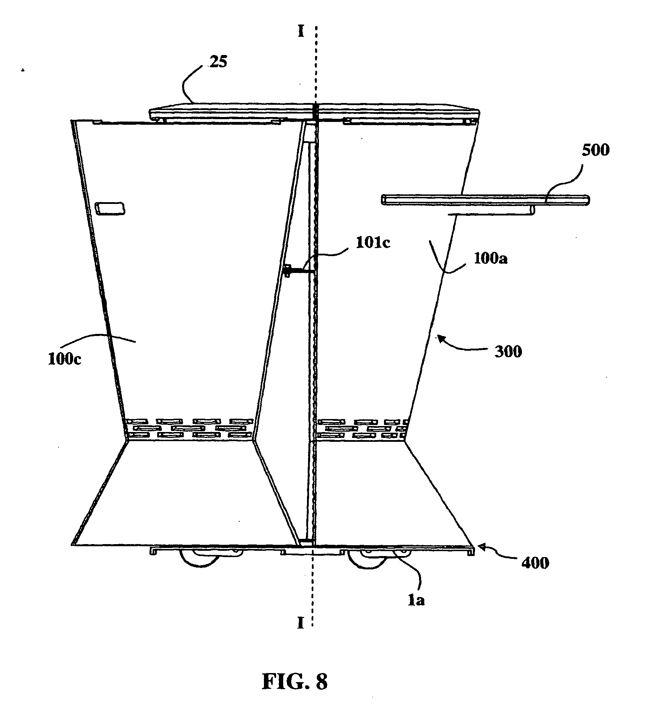

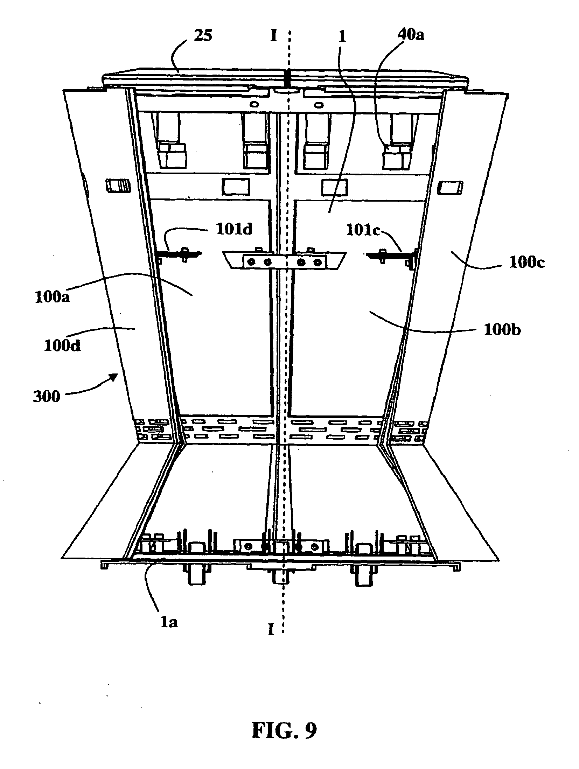

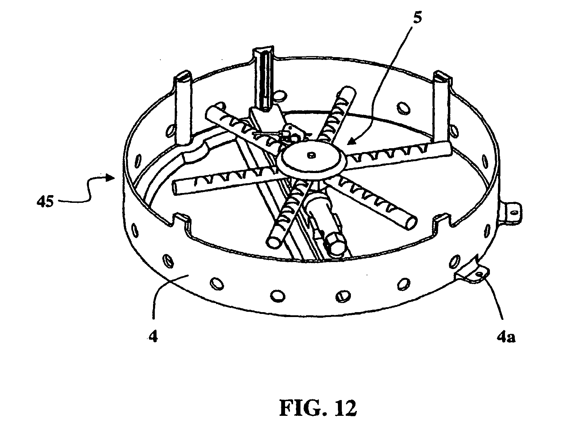

Le moyen de fixation 4 et la source de chaleur 5 forment un sous-ensemble de cuisson interchangeable 45, illustré isolément sur la figure 12, et rapporté dans une structure périphérique externe 300 telle qu'illustrée sur les figures 4 à 9.

On considère maintenant ces figures 4 à 9.

La structure périphérique externe 300 comporte la base 1a en forme de socle, la paroi périphérique 100 tubulaire à deux tronçons coniques inversés 102 et 103, et une couronne supérieure 25 continue, qui recouvre le bord supérieur de la paroi périphérique 100 tubulaire.

La paroi périphérique 100 comporte une partie fixe formant un moyen de liaison rigide 1 qui relie la base 1a à la couronne supérieure 25. La partie fixe formant le moyen de liaison rigide 1 est formée, dans le mode de réalisation illustré, de deux secteurs fixes de paroi 100a et 100b.

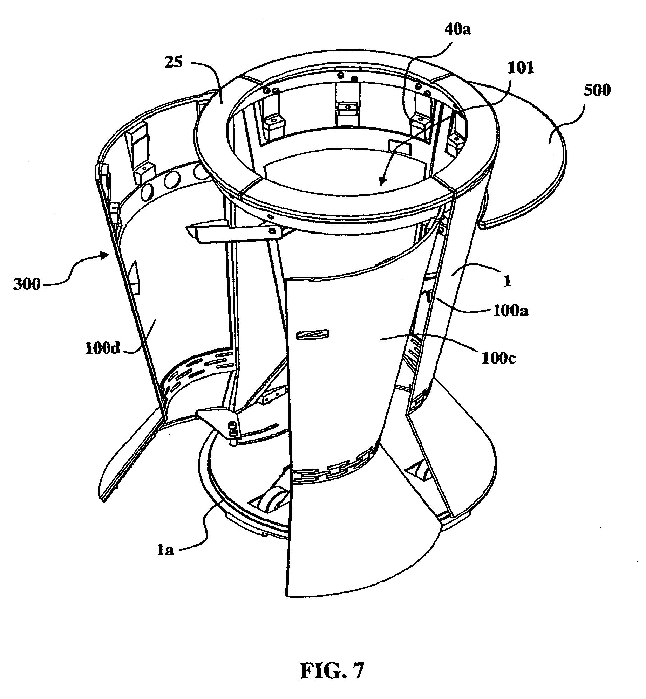

Sur chacun des secteurs fixes 100a et 100b s'articule un secteur mobile, respectivement 100c et 100d. Les secteurs mobiles 100c et 100d sont déplaçables par pivotement entre une position de fermeture illustrée sur les figures 4 à 6 et une position d'ouverture illustrée sur les figures 7 à 9. En position d'ouverture, on libère l'accès à l'espace intérieur 101.

L'articulation des secteurs mobiles 100c et 100d s'effectue au moyen de charnières, telles que les charnières 101 c et 101d, selon un axe de pivotement parallèle à l'axe longitudinal I-I.

Les quatre secteurs 100a, 100b, 100c, 100d sont de même forme, c'est-à-dire qu'ils ont la même forme générale, tout en étant munis de moyens de fixation et d'assemblage spécifiques, par exemple des charnières, des taquets de positionnement, des trous de passage de vis, comme illustré sur les figures. On peut ainsi les réaliser par moulage à l'aide d'un même moule, par exemple en fonte.

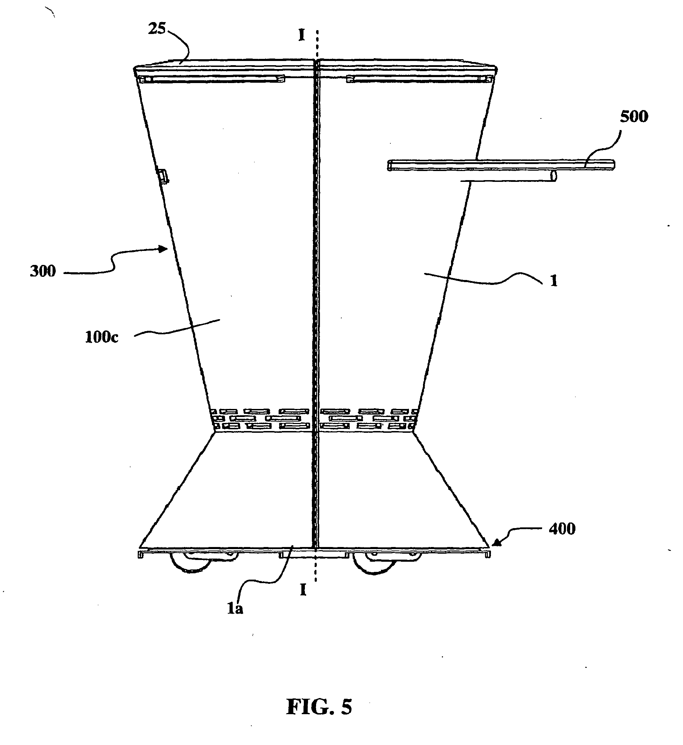

En position fermée, la base de la paroi périphérique 100 tubulaire peut être légèrement écartée de la base 1a, en définissant un interstice de ventilation 400, par exemple illustré sur les figures 5, 6 et 8.

On considère maintenant la figure 12, qui illustre en partie le sous-ensemble de cuisson interchangeable 45.

Ce sous-ensemble de cuisson comprend une couronne périphérique constituant le moyen de fixation 4, destinée à être fixée au moyen de liaison rigide 1 formé par les secteurs fixes 100a et 100b (figures 4 à 9) de la paroi périphérique 100, et qui peut supporter un support de nourriture 3 tel que la grille illustrée sur la figure 10.

Le sous-ensemble de cuisson interchangeable 45, dans le mode de réalisation de la figure 12, comprend la source de chaleur 5, sous forme d'un brûleur à gaz à barres de brûleur diamétrales en étoile.

Le moyen de fixation 4 en forme de tronçon de cylindre peut être fixé au moyen de liaison rigide 1 par des pattes radiales telles que la patte 4a, venant s'engager et se fixer par des vis sur des épaulements correspondants tels que l'épaulement 40a visible sur les figures 4, 7 et 9. La faible section transversale des pattes 4a s'oppose efficacement à la transmission de chaleur depuis le moyen de fixation 4 vers la paroi périphérique 100.

En outre, le sous-ensemble de cuisson interchangeable 45 comporte une vasque inférieure 21, destinée à retenir les résidus de cuisson tels que les graisses qui s'écoulent de la nourriture en cours de cuisson. Cette vasque 21 est visible sur la figure 10 mais elle n'a pas été illustrée sur la figure 12.

Cette vasque inférieure 21 est mobile par rapport au dispositif de fixation 4, par pivotement selon une articulation latérale solidaire de la partie supérieure fixe constituée par le moyen de fixation 4, et ayant un axe de rotation parallèle à l'axe longitudinal I-I.

Ainsi, dans ce mode de réalisation, le sous-ensemble de cuisson interchangeable 45 comprend une partie supérieure fixe constituée par le moyen de fixation 4 et la source de chaleur 5, et comporte une partie inférieure mobile constituée par la vasque inférieure 21, laquelle partie inférieure mobile pouvant prendre une position rentrée dans laquelle elle se trouve en alignement longitudinal avec le support de nourriture 3, et une position sortie dans laquelle, après ouverture de la paroi périphérique 100, elle se trouve déportée latéralement pour faciliter son accès.

On remarquera, sur la figure 10, qu'en position déportée (la figure illustre une position partiellement déportée) de la vasque 21, celle-ci est protégée latéralement par les secteurs mobiles 100d et 100c, ce qui réduit les risques d'accidents et de blessures.

Une variante de ce mode de réalisation des figures 10 et 11 consiste à remplacer le brûleur à gaz par une résistance électrique.

La vasque 21 peut être réalisée en métal réfléchissant, de sorte qu'elle constitue d'une part un réflecteur pour réfléchir vers le support de nourriture 3 le rayonnement infrarouge émanant du brûleur ou de la résistance électrique, et d'autre part un réceptacle permettant la récupération des résidus de cuisson.

Dans ce mode de réalisation, le support de nourriture 3, représenté par une grille, peut également être une plancha ou un wok.

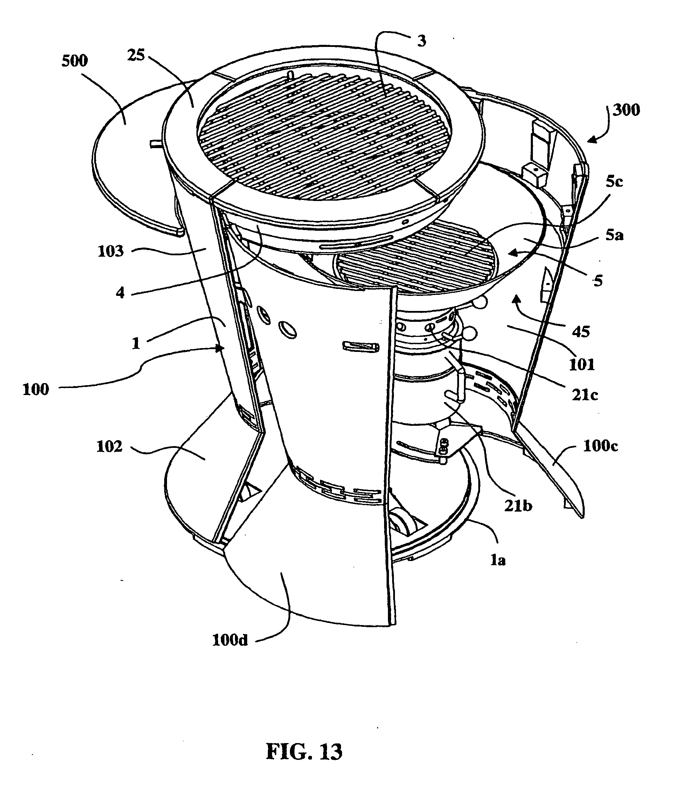

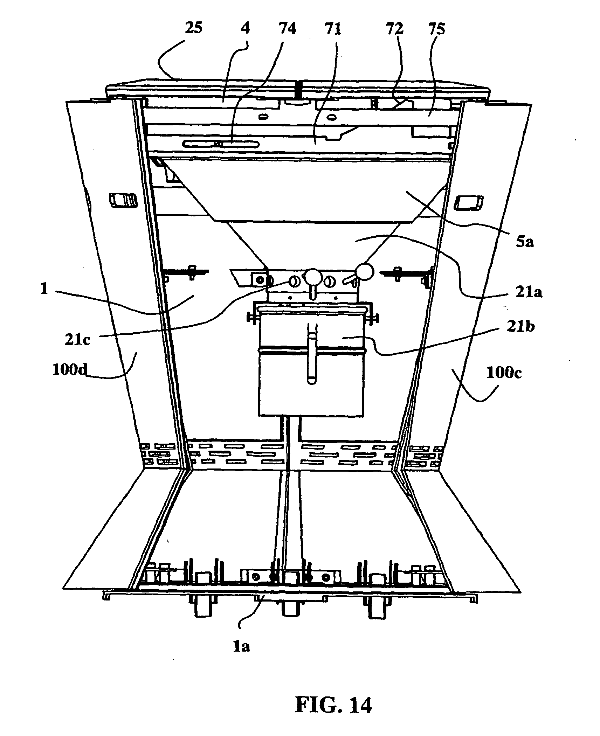

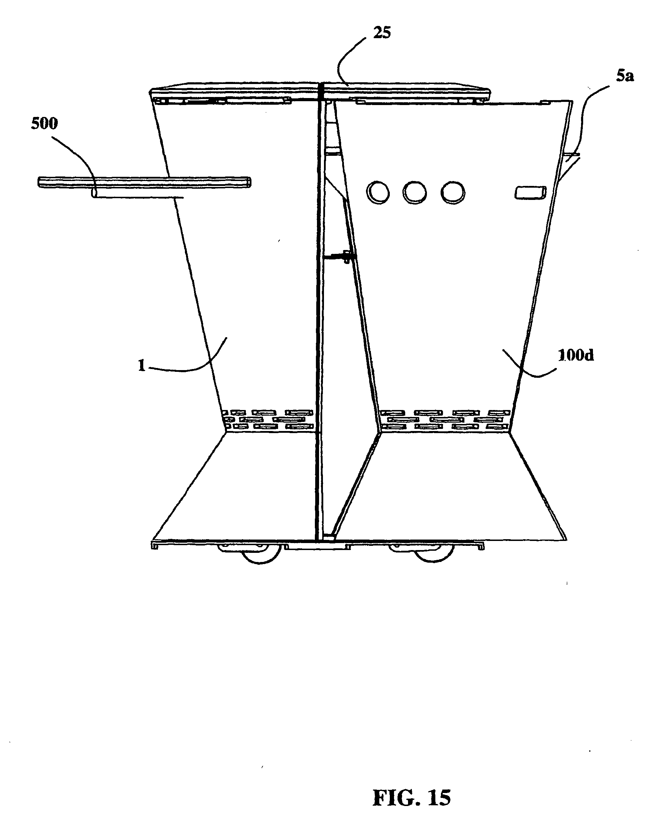

On considère maintenant les figures 13 à 18, qui illustrent un mode de réalisation à source de chaleur de type foyer à charbon ou autres combustibles solides.

Dans ce mode de réalisation, on retrouve la même structure périphérique externe 300 que dans le mode de réalisation précédent, de sorte que sa description ne sera pas répétée.

La modification dans ce mode de réalisation réside essentiellement dans la structure du sous-ensemble de cuisson interchangeable 45.

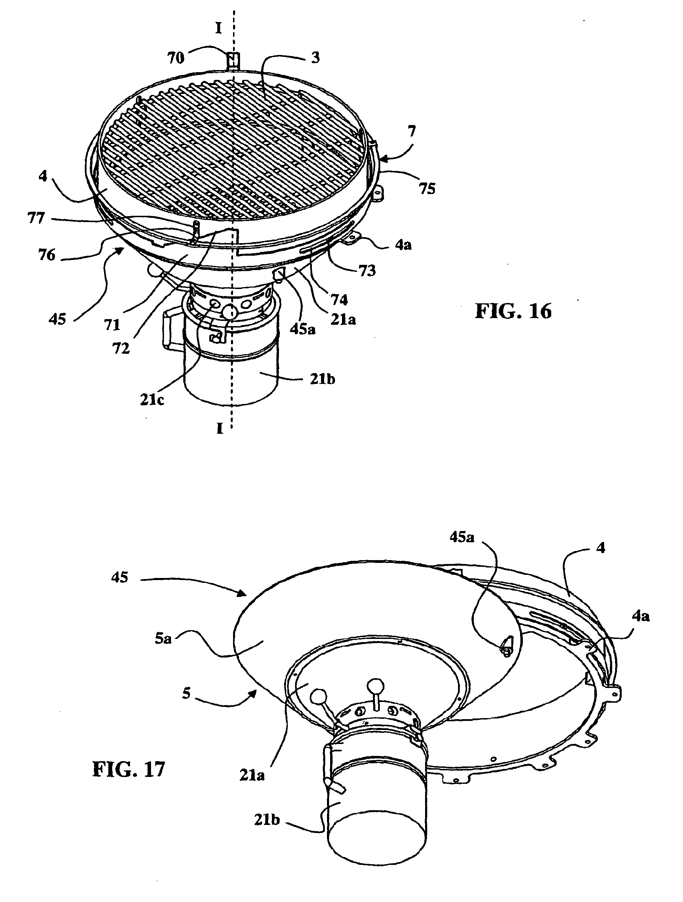

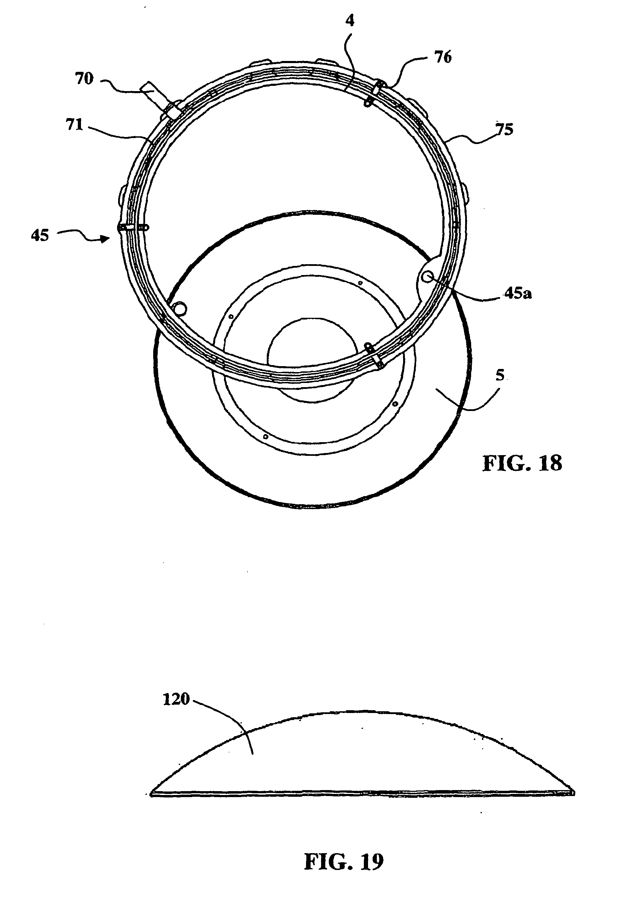

Le sous-ensemble de cuisson interchangeable 45 est illustré isolément sur les figures 17 et 18, et il comprend le moyen de fixation 4, sous forme générale d'un tronçon de cylindre apte à être fixé dans la structure périphérique externe 300, et une source de chaleur 5 de type foyer à charbon, mieux visible sur la figure 13.

La source de chaleur 5, dans ce mode de réalisation, est montée mobile par rotation d'axe latéral longitudinal vis-à-vis du dispositif de fixation 4 : les figures 17 et 18 illustrent la disposition de l'axe de rotation 45a, placé au voisinage de la périphérie du moyen de fixation 4, orienté selon une direction longitudinale parallèle à l'axe longitudinal I-I, et agencé de façon que le déport latéral possible de la source de chaleur 5 se fasse dans l'ouverture réalisée par les secteurs mobiles 100c et 100d de la paroi périphérique 100.

La source de chaleur comporte un foyer 5a en forme tronconique évasée vers le support de nourriture 3, dont le fond est occulté par une grille 5c laissant passer les cendres qui sont récupérées avec les résidus de cuisson dans un réceptacle inférieur 21 a en forme conique qui se déverse dans un réservoir amovible 21 b.

Le réservoir amovible 21 b comporte en outre des volets réglables 21 c d'entrée d'air, pour le réglage de la combustion dans le foyer.

Sur la figure 16, on a illustré le sous-ensemble de cuisson interchangeable 45 qui soutient la grille 3 support de nourriture.

Comme on le comprend sur les figures, le moyen de fixation 4 en forme de tronçon de cylindre forme une paroi intérieure (10a sur les figures 1 à 3), écartée de la portion supérieure de paroi périphérique 100 à laquelle elle est reliée par des ponts thermiques de faible section transversale (les pattes 4a de la figure 12). Ainsi, la chaleur dégagée par la source de chaleur 5 ne se transmet pas aisément à la paroi périphérique 100, qui reste donc relativement froide.

Le dispositif selon l'invention peut avantageusement avoir une hauteur de 85 à 95 cm environ de façon à reposer sur le sol et à constituer un plan de travail relativement haut, peu accessible par les enfants.

La couronne périphérique 25 continue, qui recouvre le bord supérieur de la paroi périphérique 100 tubulaire, forme un joint creux qui occulte le bord supérieur de la paroi périphérique 100, et qui permet l'ouverture des secteurs mobiles 100c et 100d, sans nuire à l'esthétique du dispositif.

Dans le mode de réalisation illustré sur la figure 16 notamment, le moyen de fixation 4 comprend des moyens d'actionnement manuel 7 aptes à déplacer de façon continue, le long de l'axe longitudinal I-I, le support de nourriture 3 entre une position de cuisson proximale P1 et une position de cuisson distale P2 (figure 1).

Les moyens d'actionnement manuel 7 comportent une partie de préhension 70 telle qu'une tirette radiale, qui est accessible par l'utilisateur à l'écart du moyen de fixation 4 et donc à l'écart des parties chaudes du dispositif.

En pratique, la partie de préhension 70 est solidaire d'un cylindre rotatif 71 monté à coulissement et à rotation autour du tronçon de cylindre formant le moyen de fixation 4. Le cylindre rotatif 71 comporte des rampes 72, par exemple trois rampes réparties en périphérie. Le cylindre rotatif 71 est maintenu axialement en position par des ergots fixes 73 engagés dans des lumières 74 du cylindre rotatif. Un arceau périphérique extérieur 75 porte des ergots 76 radiaux centripètes, qui viennent en appui sur les rampes 72 et traversent des lumières verticales oblongues 77 du moyen de fixation 4, les extrémités intérieures des ergots 76 venant soutenir le support de nourriture 3.

Ainsi, par l'actionnement de la partie de préhension 70, on peut faire tourner le cylindre rotatif 71 autour de l'axe longitudinal I-I et déplacer ainsi longitudinalement le support de nourriture 3.

La figure 3 illustre un mode de réalisation dans lequel la source de chaleur 5 est un brûleur à gaz.

Une différence par rapport aux modes de réalisation avec un foyer à charbon ou autres combustibles solides réside dans la présence d'un logement 18 pour accueillir une bouteille de gaz. Des moyens de récupération des résidus 21 sont prévus comme dans le mode de réalisation précédent, et sont placés sous le brûleur à gaz 5, afin d'éviter que de la graisse de cuisson tombe sur la bouteille de gaz.

Dans ce mode de réalisation, le support de nourriture 3 peut être une grille, une plancha, ou un wok.

Dans tous les modes de réalisation, on peut ajouter une cloche 120 amovible ou escamotable, comme celle illustrée sur la figure 19, apte à recouvrir le dispositif de cuisson pour protéger la nourriture, éviter les projections de graisse chaude sur l'utilisateur, et favoriser la cuisson. On peut également ajouter une tablette 500 radiale, rapportée sur le moyen de liaison rigide 1.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de cuisson, comprenant :
- un support de nourriture (3) conformé pour recevoir et supporter de la nourriture en cours de cuisson,
- un moyen de fixation (4) pour recevoir et supporter le support de nourriture (3),
- une base (1a) apte à reposer sur une surface d'utilisation (2),
- un moyen de liaison rigide (1), maintenant le moyen de fixation (4) et la base (1a) en position fixe et à l'écart l'un de l'autre le long d'un axe longitudinal (I-I),
- une source de chaleur (5) positionnée entre le support de nourriture (3) et la base (1 a) en définissant avec le support de nourriture (3) un espace intermédiaire (6),
- un espace intérieur (101) prévu entre le moyen de fixation (4) et la base (1a),
et dans lequel :
- le moyen de fixation (4) et la source de chaleur (5) forment un sous-ensemble de cuisson interchangeable (45) rapporté sur le moyen de liaison rigide (1),
- une paroi périphérique (100) tubulaire continue encercle l'espace intérieur (101) entre la base (1a) et le moyen de fixation (4) autour de l'axe longitudinal (I-I).
- la paroi périphérique (100) comporte une partie fixe formant le moyen de liaison rigide (1), auquel s'articule au moins une partie mobile (100c, 100d) déplaçable entre une position de fermeture de paroi périphérique et une position d'ouverture de paroi périphérique libérant l'accès à l'espace intérieur (101),
- le sous-ensemble de cuisson interchangeable (45) comprend une partie supérieure fixe (4) et une partie inférieure mobile (21), ladite partie inférieure mobile pouvant prendre une position rentrée dans laquelle elle se trouve en alignement longitudinal avec support de nourriture (3), et une position sortie dans laquelle, après ouverture de la paroi périphérique (100), elle se trouve déportée latéralement pour faciliter son accès,
**caractérisé en ce que** le moyen de fixation (4) comprend une couronne périphérique (25) continue, recouvrant le bord supérieur de la paroi périphérique (100) tubulaire, et vis-à-vis de laquelle le support de nourriture (3) est déporté en direction de la base.

2. Dispositif de cuisson selon la revendication 1, **caractérisé en ce que** la paroi périphérique (100) encercle également le moyen de fixation (4) sur la majeure partie de la dimension longitudinale du moyen de fixation (4).

3. Dispositif de cuisson selon l'une des revendications 1 ou 2, **caractérisé en ce que** la paroi périphérique comporte quatre secteurs, deux de ces secteurs adjacents (100a, 100b) étant fixes et formant le moyen de liaison rigide (1), et les deux autres secteurs (100c, 100d) étant chacun articulés à l'un des secteurs fixes (100a, 100b) pour prendre une position de fermeture de paroi périphérique et une position d'ouverture de paroi périphérique.

4. Dispositif de cuisson selon la revendication 3, **caractérisé en ce que** les quatre secteurs (100a, 100b, 100c, 100d) sont de même forme.

5. Dispositif de cuisson selon l'une quelconque des revendications 1 à 4, **caractérisé en ce que** la base (1a) comprend un socle, occupant la section transversale d'extrémité de la structure tubulaire définie par la paroi périphérique (100), et fixé au moyen de liaison rigide (1).

6. Dispositif de cuisson selon la revendication 5, **caractérisé en ce que** le socle (1a) est séparé de la paroi périphérique (100) par un interstice de ventilation (400).

7. Dispositif de cuisson selon l'une quelconque des revendications 1 à 6, **caractérisé en ce que** la partie inférieure mobile (21) est montée à pivotement selon une articulation latérale (45a) d'axe longitudinal et solidaire de la partie supérieure fixe (4).

8. Dispositif de cuisson selon l'une quelconque des revendications 1 à 7, **caractérisé en ce que** la partie supérieure fixe comporte le moyen de fixation (4) qui soutient le support de nourriture (3), et comporte une source de chaleur (5) de type brûleur à gaz ou résistance électrique, et la partie inférieure mobile comporte une vasque (21) formant réflecteur et réceptacle de récupération des résidus de cuisson.

9. Dispositif de cuisson selon la revendication 8, **caractérisé en ce que** le support de nourriture (3) est une grille, une plancha ou un wok.

10. Dispositif de cuisson selon l'une quelconque des revendications 1 à 7, **caractérisé en ce que** la partie supérieure fixe comporte le moyen de fixation (4) qui soutient le support de nourriture (3), et la partie inférieure mobile comporte une source de chaleur (5) de type foyer à charbon ou autres combustibles solides et un réceptacle (21) de récupération des cendres et des résidus de cuisson.

11. Dispositif de cuisson selon la revendication 10, **caractérisé en ce que** le moyen de fixation (4) comprend des moyens d'actionnement manuel (7) aptes à déplacer de façon continue le support de nourriture (3) entre une position de cuisson proximale (P1) dans laquelle l'espace intermédiaire (6) est réduit et une position de cuisson distale (P2) dans laquelle l'espace intermédiaire (6) est augmenté, les moyens d'actionnement manuel (7) comportant une partie de préhension (70) qui est accessible par l'utilisateur à l'écart du moyen de fixation (4).

12. Dispositif de cuisson selon l'une des revendications 10 ou 11, **caractérisé en ce que** le support de nourriture (3) est une grille.

## Patentansprüche

1. Garmachungsvorrichtung, umfassend:
- einen Gargutträger (3) zum Aufnehmen und Abstützen der zu garenden Nahrungsmittel,
- eine Fixiereinheit (4) zum Aufnehmen und Stützen des Gargutträgers (3),
- eine Basis (1a) zur Abstützung auf einer Einsatzfläche (2),
- ein starres Verbindungsmittel (1), das die Fixiereinheit (4) und die Basis (1a) in fester Stellung und bezüglich einer Längsachse (I-I) mit Abstand voneinander halten,
- eine Wärmequelle (5), die zwischen dem Gargutträger (3) und die Basis (1a) angeordnet ist und dabei zu dem Gargutträger (3) einen Zwischenraum (6) abgrenzt,
- einen Innenraum (101) zwischen der Fixiereinheit (4) und der Basis (1a), wobei in dem Innenraum (101):
- die Fixiereinheit (4) und die Wärmequelle (5) eine austauschbare Garmachungs-Teileinheit (45) bilden, die in das starre Verbindungsmittel (1) eingesetzt ist,
- eine rohrförmige, durchgehende Umfangswand (100) den Innenraum (101) zwischen der Basis (1a) und der Fixiereinheit (4) um die Längsachse (I-I) umschließt,
- die Umfangswand (100) einen festen Teil hat, der das starre Verbindungsmittel (1) bildet, an dem wenigstens ein bewegliches Teilstück (100c, 100d) angelenkt ist, das zwischen einer Schließstellung und einer geöffneten Stellung der Umfangswand beweglich ist, um den Zugang in den Innenraum (101) freizugeben,
- die austauschbare Garmachungs-Teileinheit (45) einen oberen, festen Teil (4) und einen unteren, beweglichen Teil (21) aufweist, wobei der untere, bewegliche Teil eine eingefahrene Stellung, in der er mit dem Gargutträger (3) in Längsrichtung fluchtet, und eine ausgefahrene Stellung einnehmen kann, in der er nach Öffnung der Umfangswand (100) seitlich versetzt ist, um den Zugang zu erleichtern,
**dadurch gekennzeichnet, dass** die Fixiereinheit (4) einen am Umfang umlaufenden Ring (25) aufweist, der den oberen Rand der Umfangswand (100) überdeckt, und dass der Gargutträger (3) relativ zu dem Ring in Richtung auf die Basis verschoben ist.

2. Garmachungsvorrichtung nach Anspruch 1, **dadurch gekennzeichnet, dass** die Umfangswand (100) auch die Fixiereinheit (4) auf dem größten Teil der Längserstreckung der Fixiereinheit (4) umschließt.

3. Garmachungsvorrichtung nach einem der Ansprüche 1 oder 2, **dadurch gekennzeichnet, dass** die Umfangswand aus vier Sektoren besteht, von denen zwei aneinander angrenzende Sektoren (100a, 100b) fest sind und das starre Verbindungsmittel (1) bilden, während von den beiden anderen Sektoren (100c, 100d) jeder an einem der festen Sektoren (100a, 100b) angelenkt ist, um eine geschlossene Stellung und eine geöffnete Stellung der Umfangswand zu ermöglichen.

4. Garmachungsvorrichtung nach Anspruch 3, **dadurch gekennzeichnet, dass** die vier Sektoren (100a, 100b, 100c, 100d) gleiche Form haben.

5. Garmachungsvorrichtung nach einem der Ansprüche 1 bis 4, **dadurch gekennzeichnet, dass** die Basis (1a) einen Sockel hat, der den Endquerschnitt der durch die Umfangswand (100) gebildeten, rohrförmigen Struktur einnimmt und an dem starren Verbindungsmittel (1) befestigt ist.

6. Garmachungsvorrichtung nach Anspruch 5, **dadurch gekennzeichnet, dass** der Sockel (1a) von der Umfangswand (100) durch eine Belüftungslücke (400) getrennt ist.

7. Garmachungsvorrichtung nach einem der Ansprüche 1 bis 6, **dadurch gekennzeichnet, dass** der untere, bewegliche Teil (21) um eine in Längsrichtung verlaufende, seitliche Achse (45a), die an dem oberen, festen Teil (4) angebracht ist, schwenkbar gelagert ist.

8. Garmachungsvorrichtung nach einem der Ansprüche 1 bis 7, **dadurch gekennzeichnet, dass** der obere, feste Teil das Fixierorgan (4), das den Gargutträger (3) stützt, sowie eine Wärmequelle (5) in Form eines Gasbrenners oder eines elektrischen Widerstands umfasst, wobei der untere, bewegliche Teil eine Wanne (21) hat, die einen Reflektor sowie einen Behälter für die Aufnahme der Garmachungsrückstände bildet.

9. Garmachungsvorrichtung nach Anspruch 8, **dadurch gekennzeichnet, dass** der Gargutträger (3) ein Grillrost, ein Plancha-Grill oder ein Wok ist.

10. Garmachungsvorrichtung nach einem der Ansprüche 1 bis 7, **dadurch gekennzeichnet, dass** der obere, feste Teil das Fixierorgan (4) für die Abstützung des Gargutträgers (3) aufweist und der untere, bewegliche Teil eine Wärmequelle (5) in Form eines Kohlebrennraums oder eines Brennraums für andere feste Brennstoffe sowie einen Behälter (21) zur Aufnahme der Asche und der Garmachungsrückstände umfasst.

11. Garmachungsvorrichtung nach Anspruch 10, **dadurch gekennzeichnet, dass** das Fixierorgan (4) Mittel (7) zur manuellen Betätigung für die kontinuierliche Verstellung des Gargutträgers (3) zwischen einer proximalen Garmachungsstellung (P1), in der der Zwischenraum (6) reduziert ist, und einer distalen Garmachungsstellung (P2) mit vergrößertem Zwischenraum (6) verstellt ist, wobei die manuellen Betätigungsmittel (7) ein Greiforgan (70) aufweisen, das für die Bedienungsperson mit Abstand von dem Fixierorgan (4) zugänglich ist.

12. Garmachungsvorrichtung nach einem der Ansprüche 10 oder 11, **dadurch gekennzeichnet, dass** der Gargutträger (3) ein Grillrost ist.

## Claims

1. Cooking device, comprising:
- a food support (3) configured to receive and support the food during cooking,
- a fastening means (4) for receiving and supporting the food support (3),
- a base (1a) able to rest on a use surface (2),
- a rigid connection means (1) maintaining the fastening means (4) and the base (1a) in a fixed position and away from one another along a longitudinal axis (I-I),
- a heat source (5) positioned between the food support (3) and the base (1a) while defining an intermediate space (6) with the food support (3),
- an interior space (101) provided between the fastening means (4) and the base (1a),
and in which:
- the fastening means (4) and the heat source (5) form an interchangeable cooking subassembly (45) attached to the rigid connection means (1),
- a continuous tubular peripheral wall (100) encircles the interior space (101) between the base (1a) and the fastening means (4) about the longitudinal axis (I-I),
- the peripheral wall (100) comprises a fixed part forming the rigid connection means (1), to which there is articulated at least one movable part (100c, 100d) which can move between a peripheral wall closed position and a peripheral wall open position which frees access to the interior space (101),
- the interchangeable cooking subassembly (45) comprises a fixed upper part (4) and a movable lower part (21), the said movable lower part being able to assume a retracted position in which it is in longitudinal alignment with the food support (3), and an extended position in which, after opening the peripheral wall (100), it is offset laterally in order to facilitate its access,
**characterised in that** the fastening means (4) comprises a continuous peripheral ring (25) which covers the upper edge of the tubular peripheral wall (100) and with respect to which the food support (3) is offset in the direction of the base.

2. Cooking device according to claim 1, **characterised in that** the peripheral wall (100) likewise encircles the fastening means (4) over the major part of the longitudinal dimension of the fastening means (4).

3. Cooking device according to either of claims 1 and 2, **characterised in that** the peripheral wall comprises four sectors, two of these adjacent sectors (100a, 100b) being fixed and forming the rigid connection means (1), and the other two sectors (100c, 100d) each being articulated to one of the fixed sectors (100a, 100b) in order to assume a peripheral wall closed position and a peripheral wall open position.

4. Cooking device according to claim 3, **characterised in that** the four sectors (100a, 100b, 100c, 100d) are of the same shape.

5. Cooking device according to any one of claims 1 to 4, **characterised in that** the base (1a) comprises a pedestal which occupies the transverse end section of the tubular structure defined by the peripheral wall (100) and which is fixed to the rigid connection means (1).

6. Cooking device according to claim 5, **characterised in that** the pedestal (1a) is separated from the peripheral wall (100) by a ventilation gap (400).

7. Cooking device according to any one of claims 1 to 6, **characterised in that** the movable lower part (21) is pivotably mounted about a lateral articulation (45a) of longitudinal axis and secured to the fixed upper part (4).

8. Cooking device according to any one of claims 1 to 7, **characterised in that** the fixed upper part comprises the fastening means (4) which supports the food support (3), and comprises a heat source (5) of gas burner or electrical resistance type, and the movable lower part comprises a trough (21) forming a reflector and a receptacle for recovering the cooking residues.

9. Cooking device according to claim 8, **characterised in that** the food support (3) is a grill, a plancha or a wok.

10. Cooking device according to any one of claims 1 to 7, **characterised in that** the fixed upper part comprises the fastening means (4) which supports the food support (3), and the movable lower part comprises a heat source (5) of the charcoal burner type or of the type which burns other solid fuels, and a receptacle (21) for recovering the ash and the cooking residues.

11. Cooking device according to claim 10, **characterised in that** the fastening means (4) comprises manual actuating means (7) which are able to continuously move the food support (3) between a proximal cooking position (P1) in which the intermediate space (6) is reduced and a distal cooking position (P2) in which the intermediate space (6) is increased, the manual actuating means (7) comprising a gripping part (70) which is accessible by the user away from the fastening means (4).

12. Cooking device according to either of claims 10 and 11, **characterised in that** the food support (3) is a grill.
